# DEMANDE DE BREVET EUROPEEN

(11) **EP 4 071 613 A1**
(43) Date de publication de la demande: **12.10.2022**
(21) Numéro de dépôt: 21305437.2
(22) Date de dépôt: 06.04.2021
(51) Int. Cl.: G06F 9/54, G06F 9/50

(54) **DISPOSITIF DE CALCUL HAUTE PERFORMANCE À PUISSANCE DE CALCUL ADAPTABLE**

(71) Demandeur: Bull SAS, 78340 Les Clayes-sous-Bois (FR)
(72) Inventeur: GERPHAGNON, Jean-Olivier, 38450 Vif (FR); LEVRIER, Marc, 91410 Saint-Cyr-Sous-Dourdan (FR); ISOARD, Matthieu, 38470 Teche (FR)
(74) Mandataire: Cabinet Camus Lebkiri

(57) **Abrégé**

Un aspect de l'invention concerne un dispositif de calcul haute performance à puissance de calcul adaptable dans lequel existent plusieurs calculateurs haute performance isolés les uns de autres pour garantir la sécurité des données. Chaque calculateur est piloté par un gestionnaire de ressources local qui gère le calculateur au niveau des nœuds. Tous ou partie des gestionnaires locaux sont gérés via un gestionnaire de ressources global que gère le dispositif de calcul haute performance au niveau des calculateurs qu'il comporte.

## Description

### DOMAINE TECHNIQUE DE L'INVENTION

L'invention a pour objet un dispositif de calcul haute performance à puissance de calcul à puissance adaptable dans un contexte multi-organisations.

Le domaine technique de l'invention est celui des dispositifs de calcul haute performance. Un dispositif de calcul haute performance est aussi appelé une solution HPC, un calculateur haute performance, un supercalculateur, un superordinateur, ou une ferme de calcul.

La présente invention concerne un dispositif de calcul haute performance et en particulier un dispositif de calcul haute performance à puissance de calcul adaptable.

La présente invention concerne encore un dispositif de calcul haute performance utilisable successivement par des entités différentes, notamment des entités indépendantes, une entité comportant au moins un utilisateur.

### ARRIERE-PLAN TECHNOLOGIQUE DE L'INVENTION

Les dispositifs de calcul haute performance sont actuellement en grande partie installés sur site (on dit aussi « on-premise ») avec une gestion de l'ensemble de l'infrastructure et des ressources par le détenteur. Ce modèle, pérenne depuis plus de 40 ans, reste efficace essentiellement pour de très gros besoins de calcul et/ou de manière constante. De ce fait, les ressources de calcul de type dispositif de calcul haute performance restent fréquemment limitées à des grands centres de calcul, à des laboratoires de recherches ou à des industriels. Dans ces situations, la puissance de calcul disponible est bornée et n'évolue que lors de cycles de renouvellement de 3 à 7 ans.

Les ressources, dans un dispositif de calcul haute performance, sont gérées actuellement au niveau de la granularité des nœuds. Cela signifie que l'élément d'allocation pour faire tourner les travaux est généralement le nombre de nœuds nécessaires, ou le nombre de cœurs de calcul sachant qu'un nœud peut contenir plusieurs cœurs.

Un dispositif de calcul haute performance est formé d'un grand nombre de nœuds de calculs rassemblés dans des racks. Ces racks sont installés dans des centres de données. L'administration, la gestion, le remplacement, la maintenance, etc. sont des opérations gérées par l'équipe d'exploitation (ou par une entreprise tierce sous contrat avec l'exploitant). Cette exploitation couvre l'installation, l'alimentation, le refroidissement, mais aussi l'administration au jour le jour de la solution, c'est-à-dire aussi bien l'infrastructure que les ressources. Il s'agit là du modèle sur site.

Depuis déjà quelques années, d'autres modèles, en particulier le modèle « en tant que service » ou « as a service », deviennent standards dans d'autres domaines de l'informatique. Dans le contexte du calcul haute performance, ces modèles restent plutôt limités avec de rares exemples comme les machines Cray (Cray^{™}) chez Azure (Microsoft^{™}) avec des solutions de location en tant que service plutôt limitées et actuellement peu convaincantes d'un point de vue financier.

L'un des principaux points de blocage est l'investissement initial pour l'achat de calculateurs par une société qui souhaite proposer le calcul intensif en tant que service. En effet, les ressources de calcul haute performance restent très spécialisées : cœurs de calcul spécifiques, réseau spécifique haut débit et faible latence, stockage parallèle, applications spécifiques nécessitant l'accès direct au niveau des composants (on parle aussi d'accès natif ou « bare-metal/OS »).

Dans ce contexte « en tant que service », les contraintes de spécificité des travaux à lancer, de sécurité et de non-partage, ont des conséquences dramatiques sur les performances et/ou le coût qui sont pourtant ce qui est recherché lorsque l'on utilise un dispositif de calcul haute performance. Le fait de pouvoir concilier ces aspects reste un défi de taille, et non surmonté, pour des sociétés plus habituées à une gestion de matériel le plus standard possible, on parle de matériel multi-usages. Il y a cependant des tentatives. Parmi ces tentatives il y en a deux principales :
- Utilisation de ressources non spécifiques au domaine du calcul haute performance ;
- Utilisation de ressources spécifiques au domaine du calcul haute performance.

Dans le premier cas, il s'agit finalement exactement de la même chose que du « en tant que service » standard, c'est-à-dire un modèle où l'on utilise du matériel totalement standard sans réelle considération de l'adéquation avec les besoins des travaux à exécuter. Il s'agit d'un modèle du meilleur effort qui n'offre aucune garantie de performance ni d'efficacité dans l'exécution des travaux. Ce modèle est, sur le papier, peu onéreux car il utilise des ressources initialement peu chères. Cependant, dans la réalité, l'exécution de travaux de calcul haute performance sur ce type de ressources n'a aucun sens car le temps d'exécution est grandement dégradé (plusieurs heures au lieu de quelques minutes). Cet allongement du temps d'obtention du résultat, et donc d'utilisation des ressources de calcul provoque une inflation de la consommation d'énergie qui devient disproportionnée si on la rapporte à celle liée à l'utilisation de ressources spécifiques. Le prix de revient des logiciels scientifiques commerciaux peut également devenir prohibitif dans un tel contexte de sous-utilisation des jetons de licences (pouvant être indexés sur le nombre de cœurs alloués, la durée du calcul...). Ce modèle reste cependant très intéressant pour du 'petit calcul haute performance' c'est-à-dire l'exécution d'un code de temps en temps sans réelle volonté d'avoir un(e) charge/besoin plus constant(e). Ce modèle est trivial dans son implémentation car il utilise les mécanismes déjà en place chez les fournisseurs de solution hébergée en tant que service.

Dans le second cas, la question est de rapporter l'investissement d'installation avec le taux d'utilisation de la ressource spécifique. En effet, il est communément admis qu'un dispositif de calcul haute performance est d'autant plus pertinent que son taux d'utilisation approche de 100%. Il faut donc pouvoir trouver suffisamment d'utilisateurs ayant un besoin identique, en termes de puissance, et/ou acceptant une faible sécurité. Il s'agit là d'un dilemme complexe sachant que les infrastructures HPC ont généralement des cycles de vie (remplacement/obsolescence du matériel) de l'ordre de 3 à 5 ans et ce jusqu'à 8 ans dans certains cas. Si l'on dimensionne trop performant le matériel, on risque de trouver moins d'utilisateurs, et donc on aura une occupation moindre des ressources. Si l'on ne dimensionne pas assez performant, les utilisateurs ne verront pas la différence avec le premier cas et seront tentés d'aller prendre une solution concurrente pouvant leur apporter réponse à leurs besoins.

Il ne faut pas oublier les considérations de sécurité. En effet, dans le premier cas, la gestion de la sécurité est classique avec finalement une confiance au fournisseur de la solution, étant donné qu'il n'y a aucun moyen de vérifier ni de contrôler l'infrastructure sous-jacente, celle-ci étant intégralement sous gestion du fournisseur. En effet, dans ce modèle, l'accès aux ressources n'est jamais native (bare-metal/OS) mais se fait via des couches de virtualisation (OS, réseau, stockage, etc.). Cela a, comme déjà dit, un impact conséquent sur les performances applicatives dans le contexte du HPC.

Dans le second cas, la question des éléments partagés est à mettre en lumière car dans un dispositif de calcul haute performance, l'infrastructure (réseau, administration, stockage, etc.) est intégralement partagée entre les utilisateurs du dispositif haute performance, rendant 'visibles' certaines informations. Cela met en danger les données et les travaux en cas de compromission d'un élément de la solution (et ce quel qu'il soit : nœud, commutateur, etc.). Dans le cadre d'une solution sur site, les utilisateurs sont globalement contrôlés (même entreprise, partenaires, etc.) alors que dans le cadre d'une solution en tant que service les utilisateurs peuvent être des sociétés concurrentes. La solution retenue est de réserver un dispositif haute performance pour chaque entité afin d'éviter ce risque mais dans ce cas, il est impossible de dimensionner correctement le dispositif haute performance car les besoins des différentes entités sont par trop hétérogènes.

Il n'existe donc pas de solution satisfaisante dans l'état de la technique.

### RESUME DE L'INVENTION

L'invention offre une solution aux problèmes évoqués précédemment, en permettant de rendre la puissance d'un dispositif de calcul haute performance adaptable utilisable de manière sécurisée par plusieurs entités. Cette adaptabilité est obtenue en répartissant les ressources d'un dispositif de calcul haute performance de manière à construire plusieurs calculateurs haute performance, les calculateurs obtenus étant physiquement isolés l'un de l'autre.

Un aspect de l'invention concerne **Copier-coller ici la Revendication 1.**

Ainsi les moyens requis pour l'exploitation du dispositif de calcul haute performance servent alors à l'exploitation de plusieurs calculateurs. Aucun des calculateurs résultant n'atteint la puissance combinée de toutes les ressources du dispositif de calcul haute performance, mais chaque calculateur correspond à un besoin spécifique et est donc susceptible de correspondre à un besoin existant. Le taux d'occupation global du dispositif de calcul haute performance est donc augmenté.

Outre les caractéristiques qui viennent d'être évoquées dans le paragraphe précédent, le dispositif selon un aspect de l'invention peut présenter une ou plusieurs caractéristiques complémentaires parmi les suivantes, considérées individuellement ou selon toutes les combinaisons techniquement possibles : - ... - ...

### Copier-coller ici des revendications dépendantes 2 à 8.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] montre une illustration schématique d'une unité de construction d'un dispositif de calcul haute performance selon l'invention.
[Fig. 2] montre une illustration d'un dispositif de calcul haute performance selon l'invention.
[Fig. 3] montre une illustration d'un détail d'un dispositif selon l'invention pour l'accès à des moyens de stockage externe.

### DESCRIPTION DETAILLEE

Les figures sont présentées à titre indicatif et nullement limitatif de l'invention.

Sauf précision contraire, un même élément apparaissant sur des figures différentes présente une référence unique.

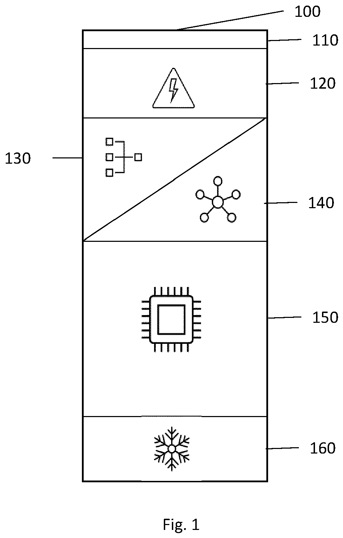

La figure 1 montre une unité 100 de construction d'un dispositif de calcul haute performance. La figure montre que l'unité 100 de construction comporte :
- Un bloc 110, optionnel, de gestion de l'unité 100 de construction qui permet l'installation, par exemple, d'un gestionnaire de ressources local qui gère l'allocation des ressources de calcul pour la réalisation de tâches de calcul. Un tel gestionnaire est, par exemple, le logiciel « Slurm » ;
- Un bloc 120 d'alimentation électrique : il s'agit d'une interface qui permet de répartir une puissance électrique amenée à l'unité 100 de construction entre tous les composants de l'unité 100 de construction ;
- Un bloc 130 réseau de gestion : il s'agit de composants, de type commutateurs, qui permettent d'établir un réseau destiné à la gestion des composants de l'unité 100 de construction. Cette gestion est, par exemple, la soumission de tâche, le relevé de sondes de mesure permettant d'évaluer l'état de fonctionnement des composants, l'envoi d'instructions de configuration, de connecter l'unité 100 de construction avec des dispositifs extérieurs à l'unité 100 de construction comme des armoires de stockage,... Typiquement un tel réseau est réalisé avec des composants Ethernet ;
- Un bloc 140 réseau d'interconnexion : il s'agit de composants de type commutateurs qui permettent aux composants du bloc 150 de calcul de l'unité 100 de construction de communiquer entre eux. Typiquement un tel réseau est réalisé avec des composant « Infiniband » ou équivalent en termes de débit et de latence ;
- Un bloc 150 de calcul : il s'agit de composants de calcul. On parle aussi de nœud de calcul. Les nœuds de calcul peuvent être de natures diverses, comme nous le verrons ci-après. En général, au sein d'une unité 100 de construction, tous les nœuds de calcul sont d'une même nature mais ce n'est pas une obligation ;
- Un bloc 160 de refroidissement : il s'agit de composants qui permettent de capter les calories produites par les autres composants de l'unité 100 de construction et de les évacuer en dehors de l'unité 100 de construction. Ce bloc est optionnel. En effet selon les technologies employées, présentes ou à venir, et la zone, en particulier géographique, d'installation il n'est pas obligatoire de prévoir un refroidissement dédié.

Selon les modes de mise en œuvre on peut se satisfaire d'un seul bloc réseau qui es alors utilisé pour la gestion et l'interconnexion.

Le bloc 150 de calcul comporte au moins un nœud de calcul. Un nœud de calcul peut être de plusieurs types parmi au moins l'un des types suivants :
- Processeur aussi appelé CPU pour Calcul Processing Unit, c'est-à-dire unité de calcul ;
- Processeur graphique aussi appelé GPU pour Graphical Processing Unit, c'est-à-dire processeur de calcul graphique ;
- Processeur accélérateur d'intelligence artificielle aussi appelé NPU pour Neural Processing Unit, c'est-à-dire unité de calcul neuronal ;
- Grille de porte programmable aussi appelé FPGA.

Il est évident que cette liste de types ne peut contenir tous les types, surtout pas ceux à venir. L'invention est bien sur transposable avec n'importe quel type d'unité de calcul.

Pour un bloc 150 de calcul, le nombre de nœuds peut aller jusqu'à 96 nœuds. Ainsi, on peut utiliser des unités 100 de construction comportant un nombre variable de nœuds de calcul d'un type variable.

Dans la pratique, tous ces blocs sont assemblés dans une armoire. Une telle armoire est aussi appelée un rack.

Dans une variante de l'invention, il est possible qu'une unité 100 de construction comporte également un bloc de stockage comportant des moyens d'enregistrement non transitoire de type disque dur, disque SSD (pour Solid State Drive c'est-à-dire disque statique à semi-conducteur) ou autre moyen de stockage de masse. Dans cette variante, ce bloc de stockage permet d'enregistrer les données d'entrée pour les tâches de calcul et les données de sorties résultant de l'exécution de ces tâches.

A partir d'une telle unité 100 de construction il peut être créé des calculateurs haute performance de toutes tailles, en assemblant le nombre voulu d'unités 100 de construction. Pour créer un calculateur haute performance avec deux unités 100 de constructions, on établit des liaisons entre les réseaux de gestion de ces deux unités 100 de construction et entre les réseaux d'interconnexion de ces deux unités 100 de construction. On dit que l'on assemble les unités 100 de construction. On procède de même avec un nombre quelconque d'unités 100 de construction pour obtenir la puissance de calcul souhaitée.

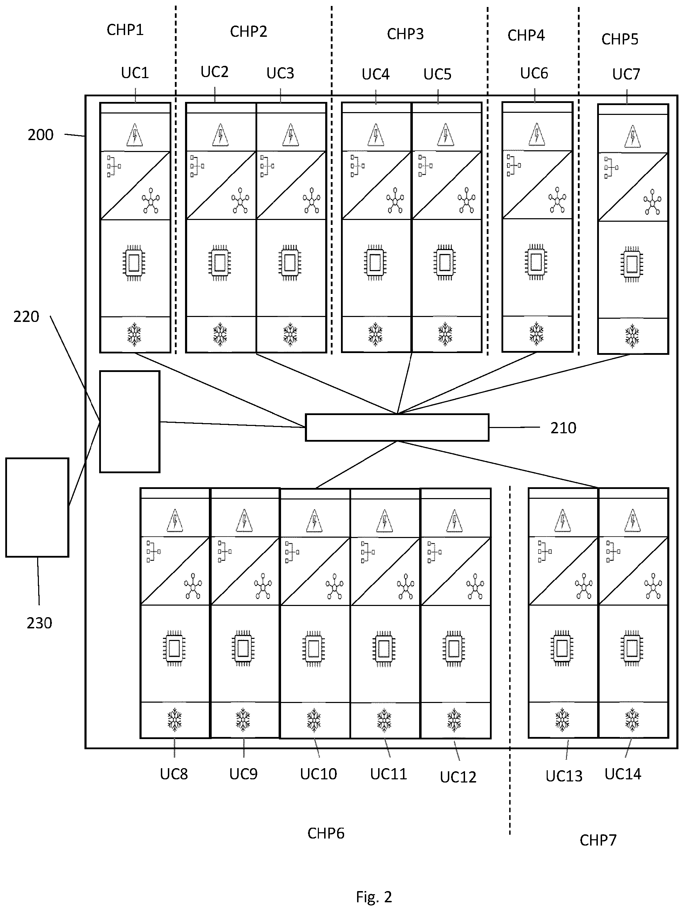

La figure 2 montre un dispositif 200 de calcul haute performance qui comporte quatorze unités 100 de construction désignées de UC1 à UC14. Ces quatorze unités 100 de construction permettent de construire, dans la configuration utilisée en exemple, sept calculateurs haute performance désignés de CHP1 à CHP7.

La figure 2 montre que les quatorze unités 100 de constructions sont assemblées comme suit :
- CHP1 : UC1 seule ;
- CHP2 : UC2 et UC3 assemblées ;
- CHP3 : UC4 et UC5 assemblées ;
- CHP4 : UC6 seule ;
- CHP5 : UC7 seule ;
- CHP6 : UC8, UC9, UC10, UC1 et UC12 assemblées ;
- CHP7 : UC13 et UC14 assemblées.

On obtient ainsi un dispositif 200 de calcul haute performance d'une puissance globale correspondant à celle de quatorze unités 100 de construction dont la puissance peut être adaptée en utilisant l'un ou l'autre des calculateurs haute performance CHP1 à CHP7 assemblés à partir de ces quatorze unités 100 de construction.

On note ici que l'on parle de dispositif haute performance et de calculateurs haute performance. Il s'agit d'une convention de langage utilisée dans ce document pour différencier le tout des parties. Le tout est un dispositif de calcul haute performance à puissance adaptable. Une partie est un calculateur haute performance comportant une pluralité de nœuds de calcul.

Chaque calculateur CHP1-CHP7 est physiquement isolé des autres calculateurs CHP1-CHP7 du dispositif 200 de calcul haute performance, ce qui signifie que les réseaux d'interconnexion des calculateurs CHP1-CHP7 haute performance sont séparés.

La figure 2 montre que le dispositif 200 de calcul haute performance comporte un commutateur 210 de gestion auquel sont connectés les calculateurs CHP1-CHP7 haute performance du dispositif 200 de calcul haute performance. Dans un exemple préféré, le commutateur 210 de gestion est configuré pour interdire les communications entre les calculateurs CHP1-CHP7. Ainsi les calculateurs CHP1-CHP7 sont isolés y compris au niveau de leurs réseaux de gestion. Il n'y a donc aucune possibilité pour une tâche exécutée par un calculateur CHP1-CHP7 d'accéder à un autre calculateur CHP1-CHP7.

La figure 2 montre que le dispositif 200 de calcul haute performance comporte un gestionnaire 220 global connecté au commutateur 210. Dans une variante, le gestionnaire 220 global n'est pas physiquement inclus dans le dispositif 200 de calcul haute performance mais simplement connecté au commutateur 210 de gestion.

Un calculateur CHP1-CHP7 est donc accédé via le gestionnaire 220 global qui, en fonction d'une authentification va ou pas accorder l'accès à un calculateur CHP1-CHP7. Cet accès est accordé via un accès au gestionnaire 110 de ressources local du calculateur CHP1-CHP7.

Selon les variantes de l'invention, le gestionnaire de ressources local est implémenté au niveau de calculateur via le bloc 110 de gestion ou via une ressource externe, physique ou virtuel. S'il s'agit d'une ressource externe alors elle est connectée au calculateur via le commutateur 210 de gestion. Cette connexion est alors sécurisée par la mise en place d'un réseau vlan et/ou d'un réseau vpn. On garantit ainsi l'isolation et la sécurité des données qui transitent entre le gestionnaire local externe et le calculateur CHP1-CHP7.

Le gestionnaire 220 global et les gestionnaires locaux sont réalisés, par exemple, par une mise en œuvre du logiciel « Slurm ».

Dans cette mise en œuvre, chaque entité utilisatrice se connecte au gestionnaire 220 global pour accéder aux calculateurs CHP1-CHP7 pour lesquels elle a obtenu des autorisations d'utilisation. On parle ici d'entité comme d'un moyen de regrouper des utilisateurs n'ayant pas besoin d'être isolés les uns des autres. On cite par exemple un laboratoire de recherche avec deux chercheurs. Dans ce cas, le laboratoire est une entité qui regroupe deux utilisateurs. Il s'agit d'une architecture multi-entité classique. Il est possible qu'une entité soit mono utilisateur auquel cas l'entité et l'utilisateur se confondent.

Dans le cas où une entité désire une isolation totale, il est possible d'offrir une solution dédiée par entité dans laquelle il existe un gestionnaire global par entité.

Les autorisations d'utilisation sont attribuées de manière calendaire en fonction des besoins exprimés par les entités. Cela est réalisé de telle sorte qu'à une date donnée, la somme des besoins correspondant à des entités autorisées n'excède pas la puissance disponible au niveau du dispositif 200 de calcul haute performance.

La figure 2 montre une base de données 230 d'état du dispositif 200 de calcul haute performance. Cette base de données 230 d'état est mise en œuvre de telle sorte qu'elle soit accessible au gestionnaire 220 de ressources global. Cette base de données d'état comporte une description des calculateurs CHP1-CHP7. Cette description comporte au moins le nombre de nœuds de calcul dont dispose chaque calculateur CHP1-CHP7. Dans une variante préférée, cette description comporte aussi le type de ces nœuds. Il est donc aisé, en fonction d'un besoin, de sélectionner un calculateur CHP1-CHP7.

Les blocs de calcul des calculateurs CHP1-CHP7 assemblés peuvent être identiques ou pas. Par exemple, une configuration possible, pour une partie des calculateurs assemblés, est :
- Calculateur CHP1 : 96 nœuds CPU dans le bloc de calcul ;
- Calculateur CHP4 : 48 nœuds CPU dans le bloc de calcul ;
- Calculateur CHP5 : 64 nœuds GPU dans le bloc de calcul.

Ces informations d'assemblages réalisés sont enregistrées dans la base de données 230 d'état. On note que l'on peut également enregistrer les performances du réseau d'interconnexion utilisé pour l'assemblage du calculateur CHP1-CHP7. Il est en effet possible que d'une norme à l'autre, les performances varient. Il est également possible d'avoir un calculateur haute performance sans réseau d'interconnexion, c'est-à-dire sans possibilité pour des processus s'exécutant sur différents nœuds de communiquer entre eux.

La base de données 230 comporte aussi un calendrier de réservation des calculateurs. Un tel calendrier permet d'associer :
- Un identifiant d'entité ;
- Un identifiant de calculateur ;
- Une période temporelle.

Il est ainsi possible de savoir quand et par qui un calculateur est réservé, et donc a contrario quand et quels calculateurs sont libres. On appelle ici une telle association un bail. Dans la pratique, ce calendrier est géré par un planificateur de tâches au niveau du gestionnaire 220 global. Un tel planificateur est, par exemple, le logiciel « Slurm ».

Dans une variante de l'invention, le calendrier permet aussi d'associer à un bail un nombre de nœuds de calcul réservés et un mode d'accès. Un mode d'accès est soit exclusif soit partagé. Ainsi, si une entité a besoin de 48 nœuds de calcul et que le calculateur le plus petit comporte 96 nœuds, ladite entité peut choisir de le réserver en mode partagé. Ce calculateur reste alors disponible pour une entité qui aurait besoin de 48 nœuds de calcul, ou moins, et qui accepte le mode partagé. A contrario, le mode exclusif permet de garantir qu'aucune autre entité ne pourra accéder au calculateur pendant le bail. Le mode exclusif se décline au niveau de l'entité et au niveau de l'utilisateur :
- Au niveau de l'entité, le calculateur peut être partagé par plusieurs utilisateurs de la même entité ;
- Au niveau de l'utilisateur, le calculateur ne peut être utilisé que par un seul utilisateur.

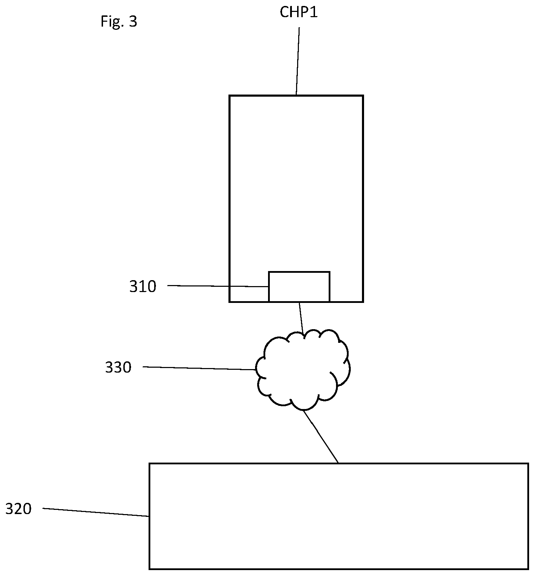

La figure 3 montre qu'un calculateur haute performance, par exemple le calculateur CHP1, comporte une interface 310 connecteur haut débit pour accéder à des moyens 320 de stockage non transitoire via un réseau 330. Le réseau 330 est configuré pour empêcher les communications entre calculateurs CHP1-CHP7.

Dans une mise en œuvre, la connexion physique des serveurs de stockage au sein de l'ensemble de serveurs de stockage se fera par un réseau d'interconnexion de type « InfiniBand », « BXi » ou équivalent avec une sécurité de type « end-to-end authentication », par exemple basée sur des jetons, afin de n'autoriser le montage et l'accès aux systèmes de fichiers et fichiers que pour les nœuds autorisés et pour les utilisateurs référencés. Il n'est pas envisageable dans un tel modèle de limiter la sécurité comme sur une solution sur site qui détermine que, si un nœud a accès au réseau d'interconnexion, il peut monter un système de fichiers de type Lustre ou GPFS (pour General Paralellel File System pour système de fichier parallèle général). Dans le cas de l'invention on garantit l'identité et les autorisations à la fois des nœuds demandant l'accès, au montage, et celui des utilisateurs demandant les données. Cela permet la gestion de droits différents pour des utilisateurs d'une même entité.

Dans un contexte de calcul haute performance, le stockage non transitoire est actuellement basé sur des systèmes de fichiers parallèles tels que Lustre ou IBM Spectrum GPFS. Ces systèmes de fichiers utilisent une batterie de serveurs de stockage pour paralléliser les accès (lecture ou écriture) afin d'offrir une performance bien plus importante en termes de débit et d'IOPS qu'un système de fichier standard (qu'il soit réseau ou local). Les systèmes de fichiers sont généralement très stables en termes de configuration et sont établis de manière pérenne dans les centres avec des calculateurs sur site. Dans le contexte de l'invention, la situation est différente car les données sont des données transitaires qui devront être effacées après l'exécution des travaux ou alors après la fin d'un bail d'un supercalculateur.

L'invention peut donc être mise en œuvre avec au moins deux modèles :
- Un premier modèle dit pérenne et dédié à une entité qui ferait des demandes récurrentes de ressources de calcul ; ces demandes ne sont pas forcément les mêmes, et donc ne concernent pas forcément le même calculateur à chaque fois ;
- Un deuxième modèle dit ad-hoc permettant de stocker les données d'entrées et/ou de sortie durant un laps de temps défini. Ce laps de temps doit être supérieur au laps de temps du bail des ressources de calcul donc doit être géré en parallèle de celles-ci.

Pour le premier modèle, on configure des unités de construction logiques sur les moyens 320 de stockage sur lesquels les données d'une entité X seront stockées de manière pérenne, c'est à dire sur la durée d'un bail spécifique pour le stockage. La configuration des unités logiques, taille, performance et durée de persistance, est laissée à la discrétion des utilisateurs. La base de données 230 d'état comporte alors une description de ces unités de construction logiques. Chacune de ces unités de construction logiques a un identifiant qui est associé à une entité. Ainsi lorsqu'un utilisateur de l'entité utilise un calculateur CHP1-CHP7 haute performance il peut choisir une unité de construction logique à attacher à ce calculateur CHP1-CHP7 comme moyens de stockage non transitoire. Dans ce modèle, les durées de vie des unités de construction logiques de stockage sont indépendantes des durées des baux pour les calculateurs.

Les moyens de stockage sont donc une partition dans une baie de disques aussi appelée NAS.

Pour le deuxième modèle, une unité de construction logique est configurée automatiquement au moment de l'établissement du bail et est montée comme unité de stockage pour le calculateur CHP1-CHP7 haute performance objet du bail. Cette unité de construction logique est détruite à la fin du bail.

Le premier modèle est intéressant car il permet de stocker durablement des configurations pour des gestionnaires 110 de ressources locaux. Une telle configuration peut être utilisé pour configurer le gestionnaire 110 de ressources local d'un calculateur CHP1-CHP7 haute performance le rendant disponible plus rapidement. Il est alors aussi facile de passer d'une configuration sauvegardée à une autre configuration sauvegardée.

Un cycle d'utilisation d'un dispositif 200 de calcul haute performance par un utilisateur d'une entité est, par exemple, le suivant :
- Dépôt des données à traiter sur des moyens de stockage non transitoire associés à l'entité ;
- Demande, par l'utilisateur via une interface, de traitement des données déposées en précisant quelle puissance de calcul est souhaitée : nombre et type de nœuds, vitesse du réseau d'interconnexion..., en précisant également le mode d'accès au calculateur : exclusif ou partagé, en précisant également les données à utiliser sur les nœuds pour effectuer le travail ;
- Analyse de la demande par le gestionnaire 220 de ressources global. Cette analyse se fait classiquement en trois étapes :
   - Première étape : Est-ce qu'un calculateur est déjà alloué à la même entité et si oui y'a-t-il suffisamment de ressources disponibles sur celui-ci ? Est-ce que le critère de cluster exclusif a été sélectionné ? Si aucun calculateur disponible n'existe pour l'entité, la recherche est effectuée sur l'ensemble des calculateurs à disposition, c'est-à-dire les calculateurs sans travail à effectuer ou les calculateurs travaillant en mode partagé ;
   - Deuxième étape : planification de la demande une fois le calculateur trouvé. Cette planification peut être immédiate ou différée en fonction des disponibilités des calculateurs.
   - Troisième étape : attribution des ressources et mise en œuvre du travail objet de la demande.

Toutes ces étapes utilisent et mettent à jour les données de la base de données 230 d'état du dispositif 200 de calcul haute performance selon l'invention.
- L'attribution des ressources à proprement parler. Une fois que le gestionnaire 220 global a trouvé les ressources et qu'elles deviennent disponibles, l'allocation est effective. Des ressources deviennent disponibles quand le travail pour lequel elles étaient mobilisées est terminé. L'utilisateur se retrouve avec une liste de nœuds utilisables de la même manière que dans le cas d'un calculateur sur site. Son travail peut être exécuté avec au préalable le montage des systèmes de fichiers sur lesquels les données ont été déposées, et la mise en place d'image de référence donnée ou demandée par l'utilisateur, la mise en place des identifications de l'utilisateur. A ce stade, le calculateur se déploie de manière autonome et automatique pour l'utilisateur avec les paramètres qu'il a spécifié. A ce stade, l'utilisateur a accès au gestionnaire de ressources local comme s'il s'agissait d'une installation sur site.
- Exécution du travail sur les ressources. Le travail s'exécute de la même manière que sur une installation sur site et avec les mêmes contraintes et facilités. L'accès interactif aux nœuds peut être octroyé selon des modes de mise en œuvre, via des connexions de type SSH et ce à travers un VPN dédié. L'utilisateur se retrouve strictement dans un contexte similaire à une exécution sur un calculateur local.
- Une fois le travail achevé, les ressources correspondantes sont libérées et remises à zéro. Cette remise à zéro se fait par exemple par l'installation d'une image vierge ou d'une image de référence ou par blocage des nœuds. L'ensemble des contextes utilisateurs sont supprimés ainsi que ses informations sur le calculateur en lui-même. Ces contextes sont les données, au niveau du calculateur, associées à l'utilisateur. Les données d'identification de l'utilisateur peuvent quant à elles rester stockées dans une base externe au calculateur. Le gestionnaire local du calculateur est, selon les modes de mise en œuvre de l'invention, sauvegardé sur un stockage dédié à l'utilisateur afin de pouvoir être utilisé comme trace du travail effectué, ou réutilisé pour d'autres travaux. Cette base contient les informations relatives aux travaux soumis par l'utilisateur. Cette base, dans le cas d'un calculateur dédié à une entreprise de manière pérenne, peut être conservée entre différentes exécutions de travaux. A la fin de cette étape, aucune information sur le calculateur ne peut être trouvée concernant des exécutions de travaux précédents.
- La récupération des données : les données sont stockées dans un système de fichiers spécifique à l'utilisateur ou à l'entité. Celles-ci doivent être récupérées dans un délai prédéfini (mode ad-hoc) de manière sécurisée à moins que le stockage soit pérennisé à la demande de l'entité (mode pérenne). Une fois le délai dépassé, dans le mode ad-hoc, les données sont supprimées et le système de fichiers détruit. Il s'agit bien sûr d'une destruction logique.

Avec l'invention, on gère deux niveaux de granularité : le niveau nœud de calcul par les gestionnaires 110 de ressources locaux, et le niveau calculateur par le gestionnaire 220 de ressources global. Cela permet de maximiser l'occupation du dispositif 200 de calcul haute performance tout en garantissant une bonne isolation entre les utilisateurs qui bénéficient d'un accès de type « bare-metal/OS ».

## Revendications

1. Dispositif (200) de calcul haute performance à puissance de calcul adaptable **caractérisé en ce qu'**il comporte une pluralité de calculateurs (CHP1-CHP7) haute performance, un gestionnaire (110) de ressources local par calculateur (CHP1-CHP7), au moins un gestionnaire (220) de ressources global connecté à une base de données (230) d'état des calculateurs (CHP1-CHP7), chacun des calculateurs (CHP1 - CHP7) du dispositif (200) de calcul haute performance :
- étant physiquement isolé (140) des autres calculateurs (CHP1-CHP7) du dispositif (200) de calcul haute performance ;
- comportant une pluralité de nœuds de calcul (150) ;
- étant configuré pour être associé à un gestionnaire (110) de ressource local dédié, le gestionnaire (110) de ressources local ayant accès à un réseau (130) de gestion du calculateur (CHP1-CHP7) et étant configuré pour la gestion de la pluralité de nœuds de calcul (150) du calculateur (CHP1-CHP7) ;
l'accès à un calculateur (CHP1-CHP7) se faisant via le gestionnaire (110) de ressources local associé qui est lui-même accessible via le gestionnaire (220) de ressources global en fonction du contenu de la base de données (230) d'état des calculateurs (CHP1-CHP7).

2. Dispositif (200) de calcul haute performance selon la revendication précédente **caractérisé en ce que** la base de données (230) d'état est configurée pour associer à un calculateur (CHP1-CHP7) une description des nœuds de calcul (150) du calculateur (CHP1-CHP7), cette description incluant au moins le nombre et le type des nœuds de calcul (150).

3. Dispositif (200) de calcul haute performance selon l'une des revendications précédentes **caractérisé en ce qu'**un nœud de calcul (150) est associé à au moins un type compris dans la liste formée d'au moins les types suivants : processeur, processeur graphique, processeur accélérateur d'intelligence artificielle, grille de portes programmables.

4. Dispositif (200) de calcul haute performance selon la revendication précédente **caractérisé en ce que** la base de données (230) d'état est configurée pour associer à un calculateur (CHP1-CHP7) un mode d'accès parmi au moins les modes suivants :
- Exclusif, réservant le calculateur (CHP1-CHP7) à une entité ;
- Partagé, permettant à plusieurs entités d'accéder au calculateur (CHP1 - CHP7) en même temps.

5. Dispositif (200) de calcul haute performance selon la revendication précédente **caractérisé en ce qu'**une entité comporte au moins un utilisateur.

6. Dispositif (200) de calcul haute performance selon l'une des revendications précédentes **caractérisé en ce que** la base de données (230) d'état est configurée pour associer à un calculateur (CHP1-CHP7) un nombre de nœuds de calcul (150) alloués.

7. Dispositif (200) de calcul haute performance selon l'une des revendications précédentes, **caractérisé en ce qu'**un calculateur (CHP1-CHP7) haute performance comporte au moins une unité de construction comportant au moins les blocs suivants :
- Alimentation ;
- Réseau
∘ De gestion, et/ou ;
∘ D'interconnexion ;
- Calcul ;

8. Dispositif (200) de calcul haute performance selon la revendication précédente, **caractérisé en ce que** la au moins une unité de construction comporte un bloc de refroidissement.

9. Dispositif (200) de calcul haute performance selon l'une des revendications 7 ou 8, **caractérisé en ce qu'**au moins un calculateur (CHP1-CHP7) comporte une pluralité d'unités de construction, les blocs réseau de gestion et/ou les blocs réseau d'interconnexion étant connectés entre eux au sein du calculateur (CHP1-CHP7).

10. Dispositif (200) de calcul haute performance selon l'une des revendications précédentes **caractérisé en ce qu'**un calculateur (CHP1-CHP7) comporte un connecteur (310) haut débit pour accéder à des moyens (320) de stockage non transitoire externe.
